# EUROPÄISCHE PATENTSCHRIFT

(11) **EP 1 900 562 B1**
(45) Veröffentlichungstag und Bekanntmachung des Hinweises auf die Patenterteilung: **03.07.2013**
(21) Anmeldenummer: 07014038.9
(22) Anmeldetag: 18.07.2007
(51) Int. Cl.: B60J 7/14

(54) **Cabriolet -Fahrzeug mit einem mehrere Dachteile umfassenden Dach**
Convertible vehicle with a roof composed of several parts
Véhicule cabriolet doté d'un toit en plusieurs parties

(30) Priorität: 17.08.2006 DE 102006038769
(43) Veröffentlichungstag der Anmeldung: 19.03.2008
(73) Patentinhaber: Valmet Automotive Oy, 23500 Uusikaupunki (FI)
(72) Erfinder: Westermann, Manfred, 49076 Osnabrück (DE); Theuerkauf, Jürgen, 49565 Bramsche (DE)
(74) Vertreter: Kronthaler, Schmidt & Coll.

(56) Entgegenhaltungen:
- EP-A- 1 647 431
- WO-A-2006/066537
- DE-A1-102004 025 051
- DE-C1- 19 635 869
- DE-C2- 19 936 252
- US-A1- 2005 184 554

## Beschreibung

Die Erfindung betrifft ein Cabriolet-Fahrzeug mit einem zumindest in Randbereich und einen mittleren Bereich geteilten hinteren Dachteil nach dem Oberbegriff des Anspruchs 1 sowie ein zugehöriges Fahrzeugdach.

Es sind Cabriolet-Fahrzeuge bekannt, die mehrere im geschlossenen Zustand aufeinander folgende Dachteile aufweisen, von denen ein hinterer gegenüber der Karosserie um eine Querachse derart abwärts verlagerbar ist, dass er in abgelegter Stellung im wesentlichen horizontal liegt und mit der bei geschlossenem Dach dem Insassenraum zugewandten Seite nach oben zeigt.

Die DE 199 36 252 C2 zeigt ein solches Fahrzeug, bei dem der hintere Dachteil an den Rändern der Heckscheibe geteilt ist und die äußeren Randteile Bestandteil eines Viergelenkmechanismus' sind. Der mittlere Bereich mit der Heckscheibe ist an seinem oberen Ende während der Dachöffnung über einen schwenkbaren Steuerhebel nach oben verlagerbar ist. Dadurch sind während der Dachöffnung und bei geöffnetem Dach nur die äußeren Randteile, dort als C-Säulen ausgebildet, tragend für den vorgeordneten Dachteil, der beispielsweise im wesentlichen aus Glas bestehen oder auch mehrere gegeneinander verlagerbare Plattenkörper umfassen und somit ein erhebliches Gewicht aufweisen kann. Die Halterung nur über die seitlichen C-Säulen führt daher zu einer instabilen Abstützung mit Wankbewegungen des Daches in Öffnungs- oder Schließphase um Fahrzeuglängsachsen und macht die Ausbildung von Queraussteifungen erforderlich, wodurch jedoch das Gewicht erhöht wird. Die herausgehobene Heckscheibe selbst kann zur Aussteifung in dieser Stellung praktisch nicht mehr beitragen. Zudem liegt ein Verbindungsscharnier im Fugenbereich tief nach unten abgesenkt und kann somit eine Verletzungsgefahr für Insassen bilden oder deren Kopffreiheit verringern.

Weiter ist es bekannt, die Heckscheibe gegenüber den seitlichen Randteilen bei der Dachöffnung zu drehen. Dadurch ergibt sich neben den genannten Schwierigkeiten jedoch zusätzlich ein Abdichtungsproblem: Die Heckscheibe muss zum Beispiel oberhalb ihrer horizontalen Drehachse von unten gegen eine Teildichtung zur Heckscheibe und unterhalb des Drehpunktes von oben gegen eine andere Teildichtung gepresst werden.

Aus der US 2005/0184554 A1 ist ein verstellbares Hard-Top-Verdeck mit einem vorderen Dachteil und einem hinteren Dachteil bekannt. Das hintere Dachteil ist in Verdeckquerrichtung geteilt mit einem mittleren Bereich und seitlichen Randteilen ausgebildet. Das vordere Dachteil ist mit dem mittleren Bereich schwenkbeweglich verbunden, wobei die Randteile in einem Verbindungsbereich des vorderen Dachteils mit dem mittleren Bereich angebunden sind. Bei einer Überführung des Verdecks zwischen einer geschlossenen Position und einer offenen Position werden die Randteile gegenüber dem mittleren Bereich heckwärts und abwärts verlagert.

Der Erfindung liegt das Problem zugrunde, bei Teilung des hinteren Dachteils in zumindest einen mittleren Bereich und seitliche Randteile die seitlichen Randteile möglichst leicht auszubilden.

Die Erfindung löst dieses Problem durch ein Cabriolet-Fahrzeug mit den Merkmalen des Anspruchs 1 sowie durch ein bewegliches Fahrzeugdach mit den Merkmalen des Anspruchs 11. Hinsichtlich vorteilhafter Ausgestaltungen der Erfindung wird auf die weiteren Ansprüche 2 bis 10 verwiesen.

Mit der Erfindung sind die seitlich außen liegenden Randteile von einer Tragfunktion entlastet. Diese wird nur von dem mittleren Bereich des hinteren Dachteils wahrgenommen. Bei der erheblichen Breite einer solchen Abstützung für den vorgeordneten Dachteil ist die Stabilität des Daches verbessert, Wankbewegungen um Fahrzeuglängsachsen sind minimiert. Durch die Anhängung der Randteile können diese selbst sehr leicht - zum Beispiel aus Kunststoff - ausgebildet sein. Zudem ist es möglich, die Randteile - bezogen auf den mittleren Bereich - mit einer Komponente nach oben aus der fluchtenden Ebene zum mittleren Bereich herauszuheben, so dass diese aus seitlichen Schenkeln eines den mittleren Bereich untergreifenden Wasserkanals ohne ein Dichtungsproblem nach - relativ gesehen - schräg oben herausbewegt werden können.

Dadurch, dass die Randteile völlig frei von einer tragenden oder auch von einer bewegungsvermittelnden Funktion für den vorgeordneten Dachteil sind, kann die Bewegung des vorgeordneten Dachteils in seiner Abstützung durch den hinteren Dachteil dann auch ohne die Randteile selbst in gleicher Weise ablaufen. Die Randteile selbst können zwar äußerlich wie C-Säulen seitlich der Heckscheibe liegen, ohne jedoch außer einer abdichtenden und verkleidenden Funktion noch weitere Funktionen erfüllen zu müssen.

Besonders günstig ist der mittlere Bereich mit seinem bei geschlossenem Dach unteren Ende schwenkbeweglich um eine quer zum Fahrzeug liegende erste Achse an die Karosserie angebunden und der vorgeordnete Dachteil gegenüber dem hinteren Dachteil um eine parallel zur ersten Achse liegende zweite Achse schwenkbeweglich an das obere Ende des mittleren Bereichs angebunden. Dann kann die obere Achse weit oben liegen, ohne an separaten Auslegern gehalten sein zu müssen und ohne den Kopfraum von Insassen einzuschränken.

Vorteilhaft ist dann für die Anhängung der Randteile ein einfaches Getriebe für deren Herausheben aus der Ebene der Heckscheibe vorgesehen, zum Beispiel sehr einfach ein Zweischlag. Dabei kann im Fugenbereich ein einfacher Schwenkhebel gehalten sein, während das Randteil an sich den unteren Hebel des Zweischlags ausbildet.

Mit einem solchen oder ähnlichen Getriebe können die Randteile ohne eigenen Antrieb bei Öffnen des Daches zwangsweise gegenüber dem die Dachbewegung vermittelnden mittleren Bereich bewegbar sein, so dass am Ende der Öffnungsbewegung die Randteile gegenüber dem rein verschwenkten mittleren Bereich weiter abwärts und heckwärts verlagert sein können und somit der verbleibende Kofferraum maximiert ist.

Wenn unterhalb der Randteile und des mittleren Bereichs ein gemeinsamer Wasserkanal liegt, aus dem die Randteile mit einer Aufwärtskomponente heraushebbar sind, ist ein Dichtungsproblem mit einer zur Abdichtung erforderlichen Krafteinwirkung aus verschiedenen Richtungen vermieden. Der Wasserkanal selbst muss - anders als im zitierten Stand der Technik - über seinen Querverlauf nicht geteilt sein, sondern kann einstückig den mittleren Bereich und die Randteile untergreifen. Damit ist insbesondere das Problem verhindert, dass das Wasser einerseits nach außen ablaufen muss, jedoch andererseits den Randteilen zugeordnete Wasserkanalabschnitte den Abschnitt des mittleren Bereichs bei geschlossenem Dach übergreifen müssten.

Vielmehr kann in der erfindungsgemäßen Ausbildung der Wasserkanal fest an den mittleren Bereich angebunden sein und von dort aus quer seitlich herausragen, ohne eine Unterbrechung aufzuweisen.

Besonders vorteilhaft liegen dabei die Randteile bei geschlossenem Dach über ihre gesamte Länge von außen auf dem mittleren Bereich dichtend auf, so dass ein Bruch in der Dichtungslinie vermieden ist.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:
- Fig. 1: eine schematisch angedeutete und nach vorne und unten abgebrochene Darstellung eines erfindungsgemäßen Cabriolet-Fahrzeugs in perspektivischer Ansicht von schräg hinten bei geschlossenem Dach,
- Fig. 2: das Dach nach Fig. 1 während seiner beginnenden Öffnung und Herausheben der hinteren Randteile aus dem unteren Wasserkanal,
- Fig. 3: eine ähnliche Ansicht wie Fig. 2 bei weiter fortschreitender Dachöffnung,
- Fig. 4: eine ähnliche Ansicht wie Fig. 3 in schon teilweise gewendeter Stellung des hinteren Dachteils und aus der Ebene der Heckscheibe herausgehobenen C-Säulen,
- Fig. 5: eine ähnliche Ansicht wie Fig. 4 bei vollständig abgelegtem Dach in Öffnungsstellung,

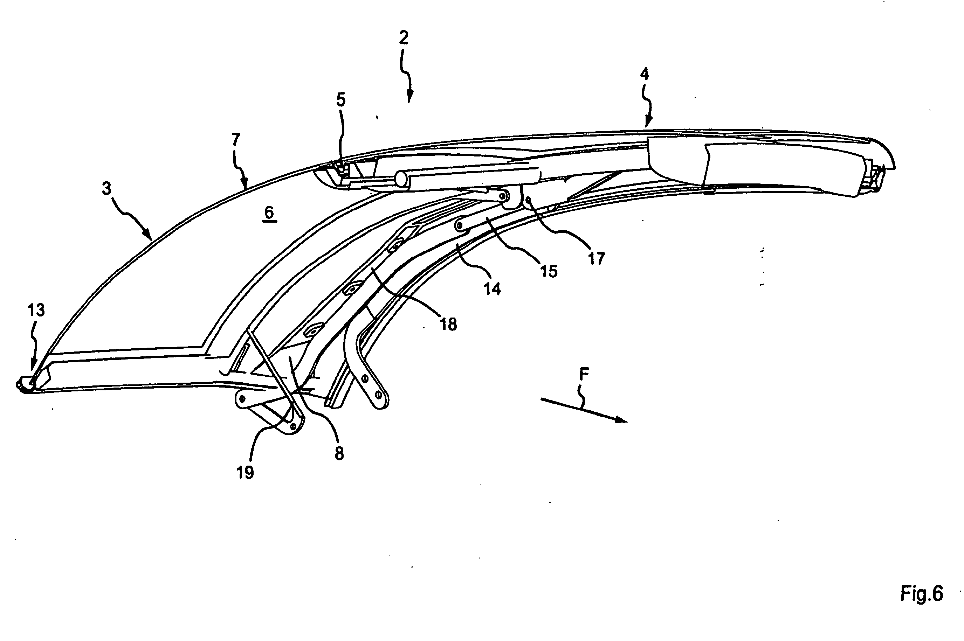

- Fig. 6: eine Ansicht schräg von innen in den linken Teil des geschlossenen Daches in Stellung nach Fig. 1,
- Fig. 7: eine ähnliche Ansicht wie Fig. 6 des Daches bei beginnender Öffnung nach Fig. 2,
- Fig. 8: eine ähnliche Ansicht wie Fig. 7 bei weiter fortschreitender Dachöffnung entsprechend Fig. 3,
- Fig. 9: eine ähnliche Ansicht wie Fig. 8 bei Stellung des Daches entsprechend Fig. 4,
- Fig. 10: eine ähnliche Ansicht wie Fig. 9 bei vollständig geöffnetem Dach entsprechend Fig. 5,
- Fig. 11: eine ähnliche Ansicht wie Fig. 6 bei geschlossenem Dach aus einer leicht gedrehten und im wesentlichen nach hinten in das Dach schauenden Perspektive.

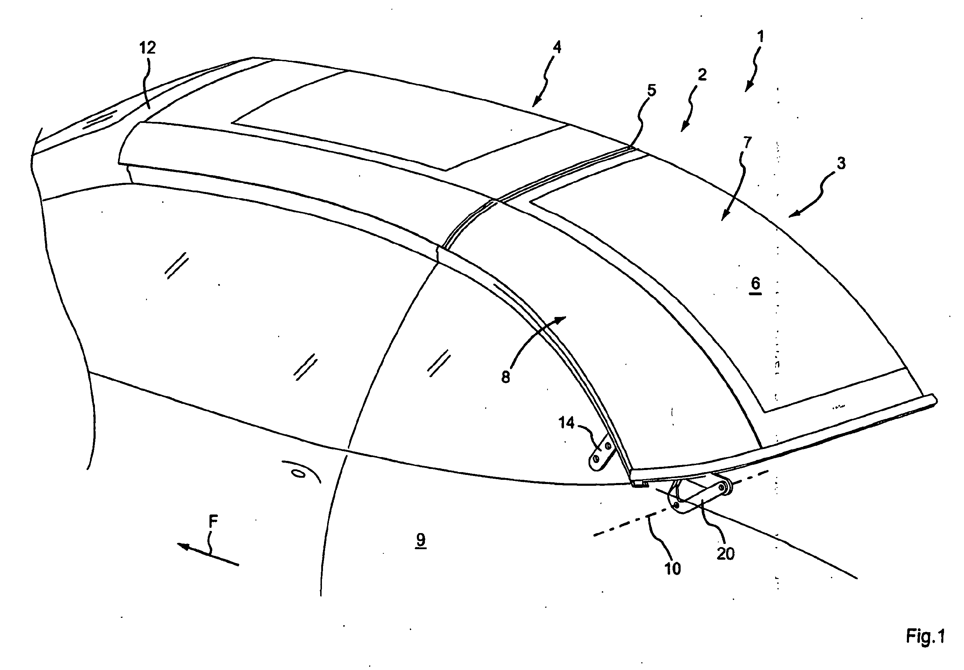

Das erfindungsgemäße Cabriolet-Fahrzeug 1 umfasst gemäß der Zeichnung zwei bei geschlossenem Dach 2 bezüglich der Fahrtrichtung F aufeinander folgende und bezüglich ihrer Außenflächen an einer zumindest im wesentlichen quer zum Fahrzeug liegenden Fuge 5 voneinander getrennte Dachteile 3, 4. Insbesondere der vorgeordnete Dachteil 4 kann wiederum mehrere hintereinander liegende und gegeneinander verlagerbare Plattenteile umfassen. Er ist dem in geschlossener Stellung hier schräg aufragenden hinteren Dachteil 3 (Fig. 1) vorgeordnet und liegt zumindest nahezu horizontal. Die Dachteile 3, 4 sind im wesentlichen aus starren Teilen gebildet, umfassen zumindest starre Rahmen, über die ein Bezug gespannt sein kann.

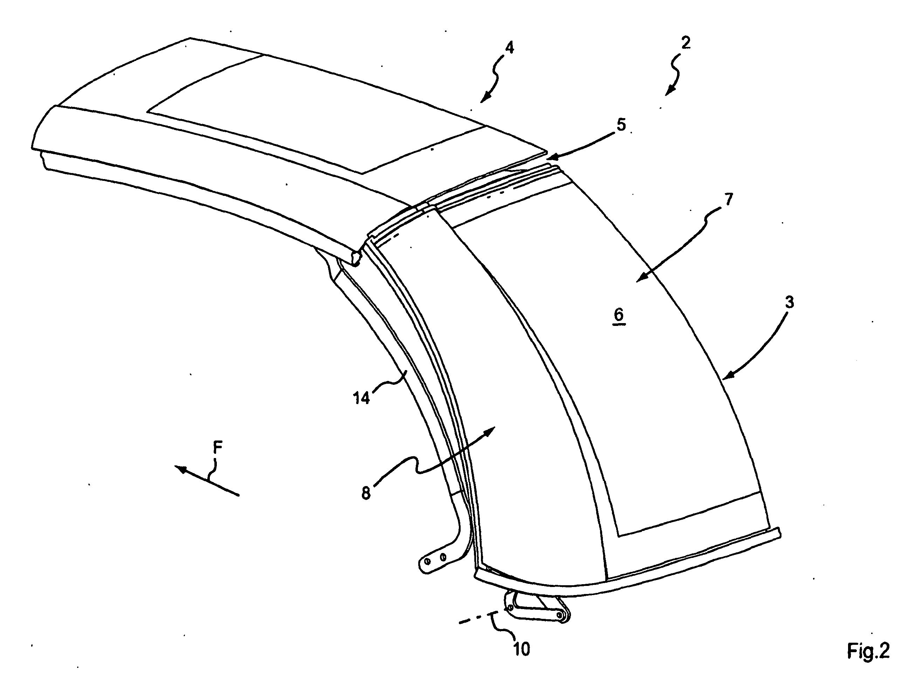

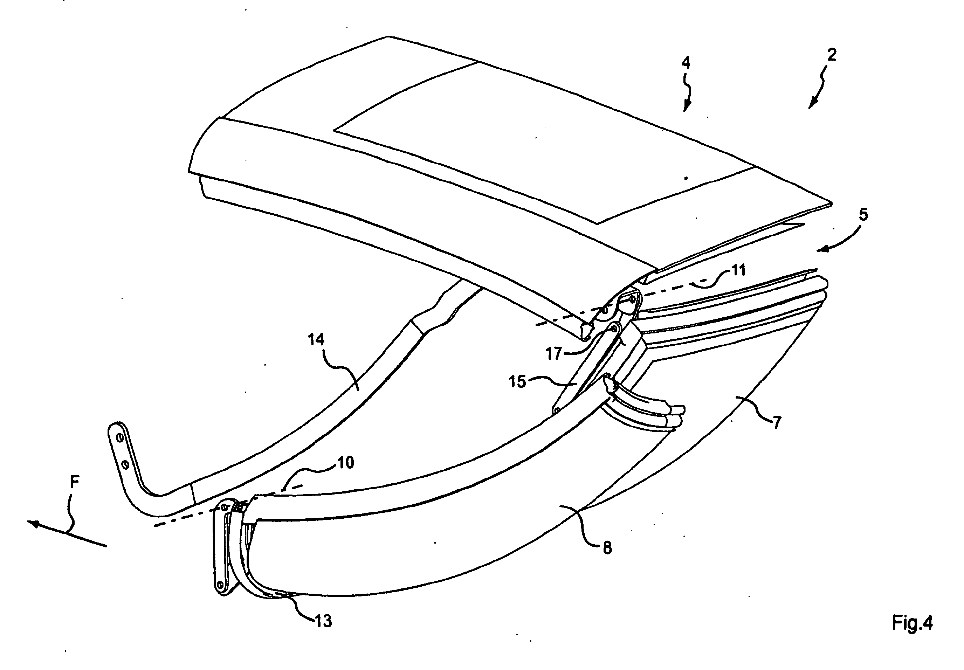

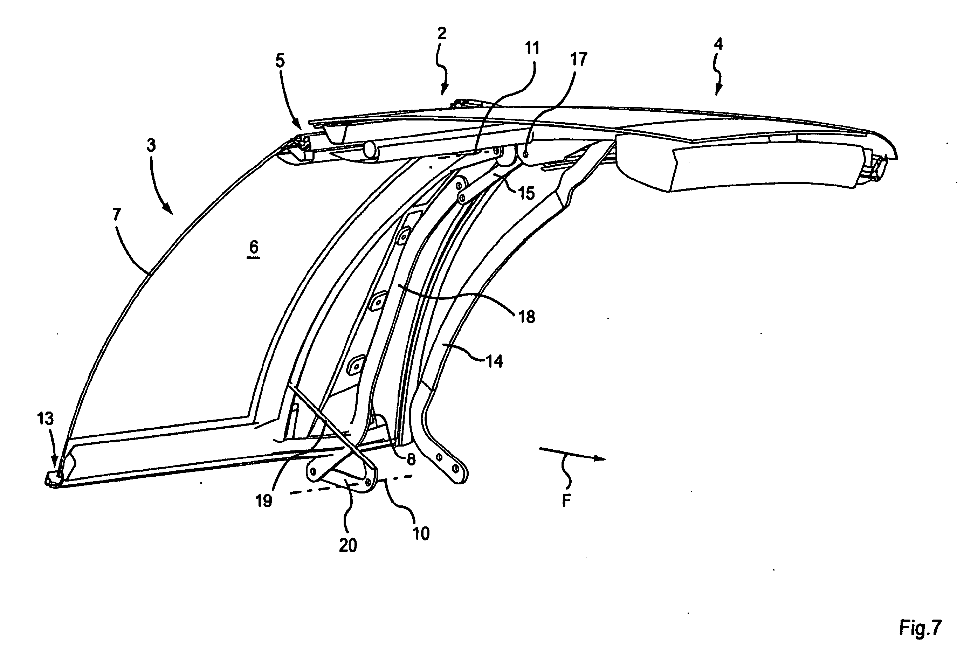

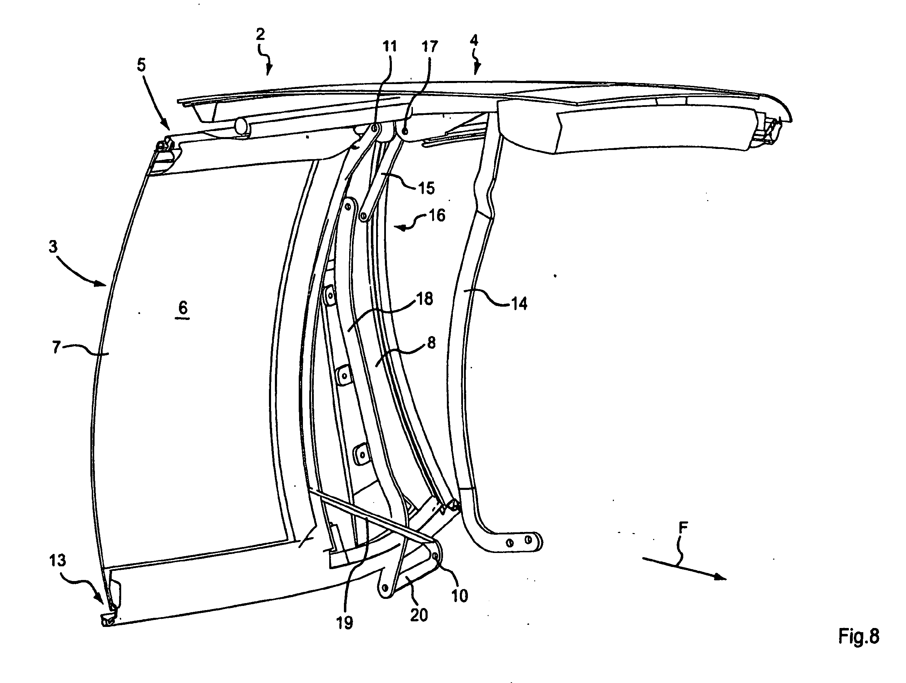

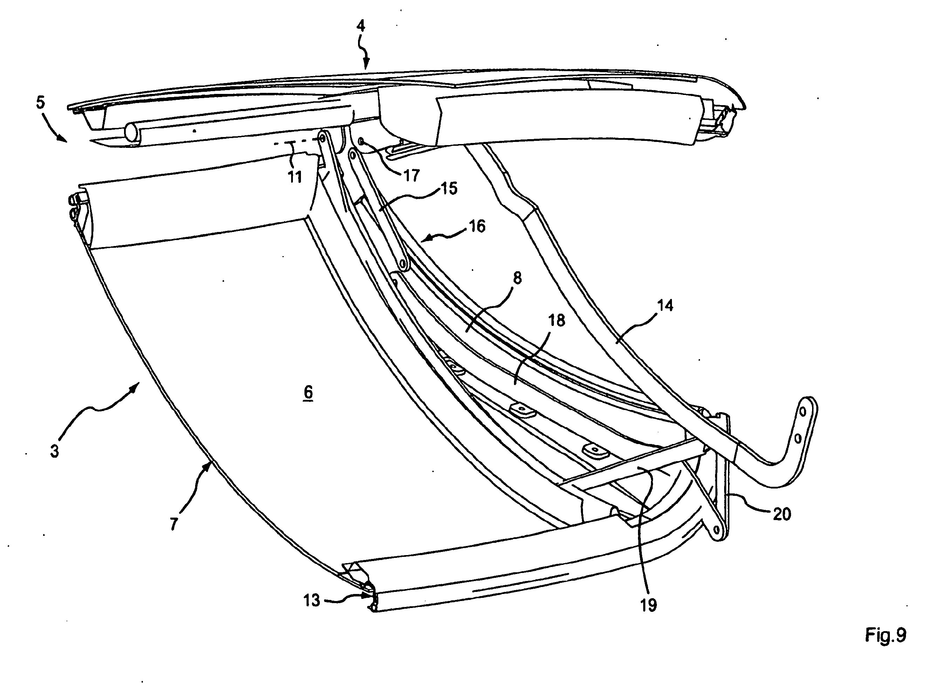

Der hintere Dachteil 3 ist geteilt in zumindest einen bezüglich der Fahrzeugquerrichtung mittleren Abschnitt 7, der hier eine Heckscheibe 6 umfasst, und seitlich davon angeordnete äußere Randteile 8, die bei geschlossenem Dach 2 (Fig. 1) zum Beispiel nach Art von C-Säulen neben der Heckscheibe 6 stehen und während der Dachöffnung (Fig. 2 bis Fig. 5 bzw. Fig. 7 bis Fig. 10) relativ zum mittleren Bereich 7 beweglich sind.

Die Heckscheibe 6 kann faltbar oder insbesondere starr ausgebildet sein und beispielsweise aus Kunststoff oder Glas bestehen.

Das erfindungsgemäße Cabriolet-Fahrzeug 1 kann sowohl ein Zweisitzer sein als auch einen größeren Insassenraum mit zwei oder mehr Sitzreihen hintereinander umfassen.

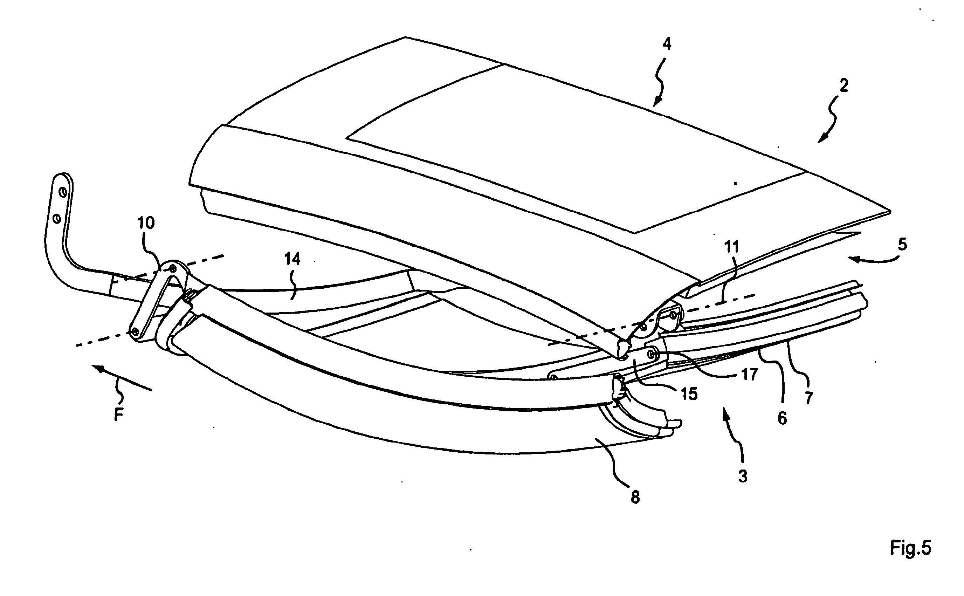

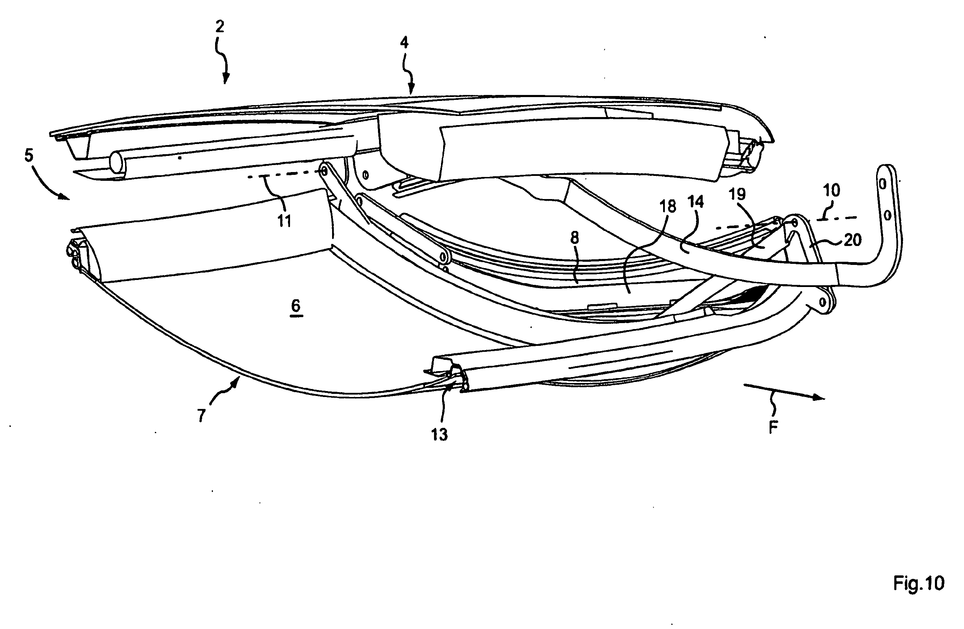

Zur Dachöffnung ist der hintere Dachteil 3 heckwärts und abwärts verlagerbar und der vorgeordnete Dachteil 4 an den hinteren Dachteil 3 heranbewegbar. Die Verlagerung des hinteren Dachteils 3 erfolgt hier als eine reine Schwenkbewegung um eine horizontale und quer zum Fahrzeug 1 liegende erste Schwenkachse 10, die bezüglich der Karosserie 9 ortsfest oder während der Öffnung verlagerbar sein kann. Die Ablagebewegung kann auch eine überlagerte Bewegung mit translatorischen und rotatorischen Anteilen auf einer Kreisbahn oder anderen Kurve sein. Im Ausführungsbeispiel ist diese Achse 10 ortsfest bezüglich der Karosserie 9. In geöffneter Stellung (Fig. 5, Fig. 10 weist daher die Innenseite der Heckscheibe 6 im wesentlichen nach oben.

Das Heranschwenken des vorgeordneten Dachteils 4 an den hinteren Dachteil 3 erfolgt hier ebenfalls als reine Schwenkbewegung um eine zweite, mit dem hinteren Dachteil 3 bewegbare obere horizontale Schwenkachse 11.

Die Schwenkachse 10 verbindet dabei die Karosserie 9 mit dem mittleren Abschnitt 7 des hinteren Dachteils 3, die Schwenkachse 11 den mittleren Abschnitt 7 mit dem vorgeordneten Dachteil 4.

Der vorgeordnete Dachteil 4 ist daher neben seiner Abstützung am Windschutzscheibenrahmen 12 nur durch den mittleren Bereich 7 des hinteren Dachteils 3 getragen.

Die C-Säulen-artigen Randteile 8 sind hingegen im Fugenbereich 5 mit angehängt. Sie können mit ihrer Außenfläche bei geschlossenem Dach 2 fluchtend zur Ebene der Heckscheibe 6 liegen, so dass die Mehrteiligkeit des hinteren Dachteils 3 in dieser Dachstellung nicht sichtbar sein muss.

Während der Dachöffnung werden die Randteile 8 aus ihrer ursprünglichen gemeinsamen Ebene mit dem mittleren Bereich 7 derart herausgehoben, dass die Randteile bei vollständig geöffnetem Dach gegenüber dem mittleren Bereich durch das Abwärtsverschwenken um die Achse 10 dann heckwärts und zumindest bereichsweise abwärts verlagert sind (Fig. 5, Fig. 10).

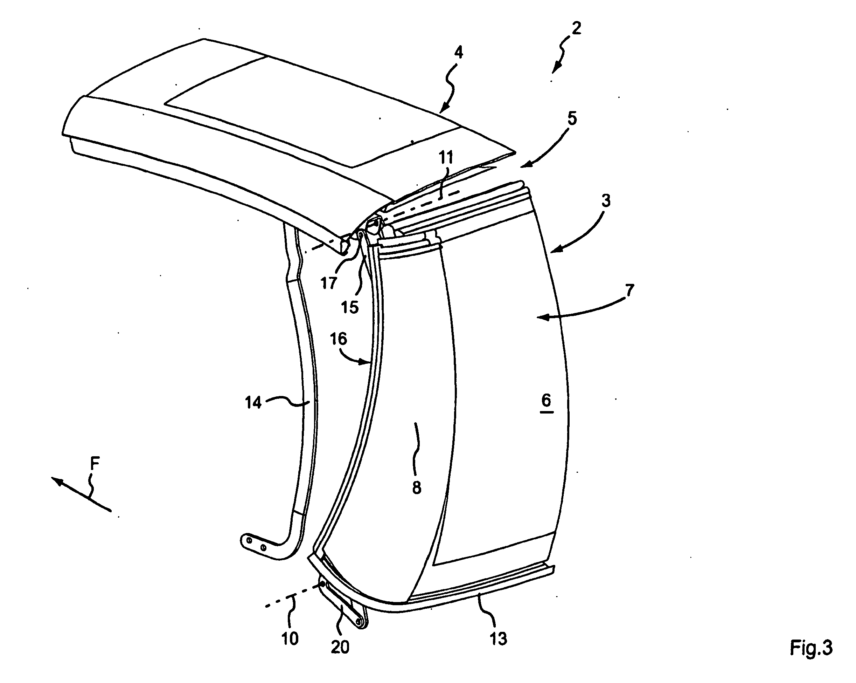

Mit dieser Art der Bewegung der Randteile 8 ist es ermöglicht, dass unterhalb von diesen und des mittleren Bereichs 7 ein gemeinsamer Wasserkanal 13 gehalten ist, der einstückig sein kann und aus dem die Randteile 8 mit einer Aufwärtskomponente - zum Beispiel in Fig. 3 angedeutet - heraushebbar sind. Das Wassermanagement ist dadurch sehr vereinfacht. Das Wasser kann zu den Seiten hin ungestört abfließen. Insbesondere ist es nicht nötig, dass seitliche Abschnitte eines Wasserkanals von oben in einen mittleren Abschnitt greifen müssten, wie dies im Stand der Technik der Fall ist. Eine derartige Abstufung liegt genau kontraproduktiv zum gewünschten Wasserablauf zu den Seiten und macht unter Umständen einen Zwischenabfluss aus dem Wasserkanal erforderlich, was zusätzlichen Aufwand und Kosten bedeutet.

Im Ausführungsbeispiel ist der nach oben offene und zum Beispiel in liegender U-Form ausgebildete Wasserkanal 13 fest an den mittleren Bereich 7 angebunden und ragt von dort aus quer seitlich heraus. Die Seitenflügel sind an die untere Kontur der C-Säulen-artigen Randteile 8 angepasst.

Auch eine Zuordnung des Wasserkanals zu einem Deckelteil eines Verdeckkastens, hier nicht eingezeichnet, wäre alternativ möglich.

Im gezeichneten Ausführungsbeispiel bildet der mittlere Bereich 7 eine hintere sog. Hauptführungsstange eines Schwenkparallelogramms für den vorgeordneten Dachteil 4. Vor diesem ist zur Vervollständigung des Schwenkparallelogramms zumindest nahezu parallel zum mittleren Abschnitt 7 an jeder Fahrzeugseite eine Führungsstange 14 vorgesehen.

An deren Stelle könnten zum Beispiel auch Torsionswellen oder ähnliches für die Vermittlung der Relativbewegung des vorgeordneten Dachteils 4 zum mittleren Abschnitt 7 des hinteren Dachteils 3 vorgesehen sein.

Hier ist über Führungsstange 14 und Hauptführungsstange 7 die Bewegung des vorgeordneten Dachteils 4 vollständig vermittelbar. Die Randteile 8 können daher nicht nur frei von einer tragenden, sondern auch frei von einer bewegungsvermittelnden Funktion für den vorgeordneten Dachteil 4 sein. Die Kraftübertragung zu diesem kann dann auch ohne diese Randteile 8 gleichwertig stattfinden.

Um ein sehr flaches Dachpaket und eine Dachablage möglichst hoch zur Maximierung des verbleibenden Kofferraums zu ermöglichen, sind die seitlich stark eingezogenen Randteile 8 gegenüber dem mittleren Bereich 7 mit der Heckscheibe 6 in einer tieferen Stellung im Kofferraum ablegbar. Der Kofferraum ist dadurch maximiert. Im mittleren Bereich bleibt somit eine erhebliche Beladehöhe, das Dachteilpaket kann sehr flach gehalten werden.

Für diese Relativbewegungsmöglichkeit sind die Randteile 8 über ein die heraushebende Bewegung vermittelndes Getriebe 16 am Fugenbereich 5 des Daches 3 angehängt. Hier ist als Getriebe ein Zweischlag ausgebildet. Dieses umfasst einen Schwenkhebel 15, der beispielsweise auf der oberen Schwenkachse 11 mit angeordnet ist. Aus zeichentechnischen Gründen verschiebt sich hier in der Dachbewegung die Anlenkung 17 des Schwenkhebels 15, was jedoch real nicht so sein muss. Es kann sich um eine feste Schwenkanlenkung handeln.

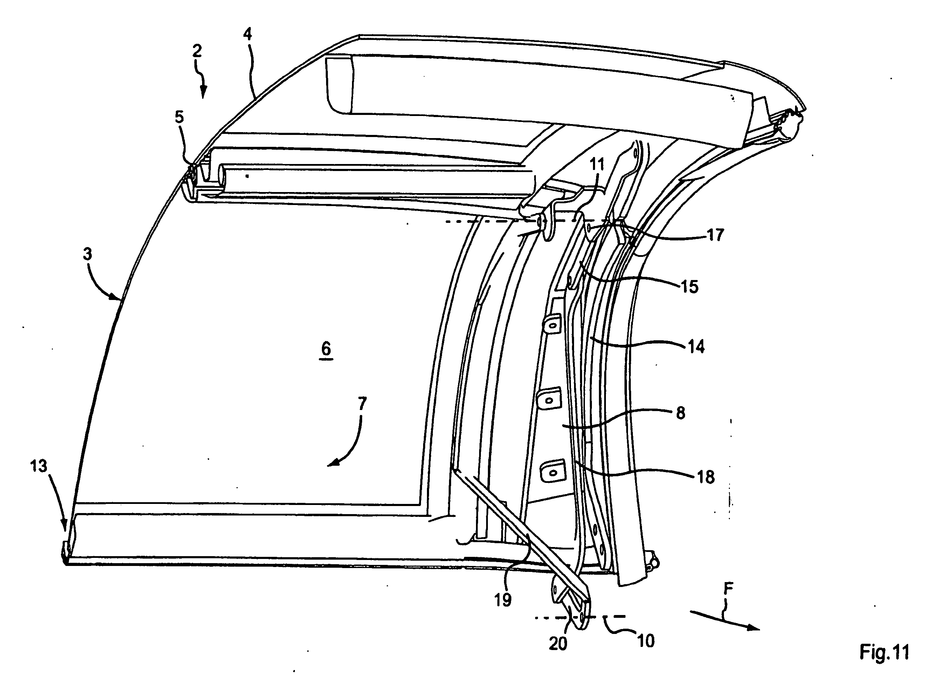

Der untere Hebel des Zweischlags ist durch eine ortsfest mit dem Randteil 8 verbundene Einlage 18 gebildet, die mit auf dem unteren Schwenkhebel 20 für den mittleren Bereich 7 gehalten und derart nach außen abgekröpft ist, dass sie eine Halterung 19 für den mittleren Bereich 7 untergreift (Fig. 11).

Diese Ausbildung ist nur beispielhaft für ein Getriebe 16. Vorteilhaft ist dieses so ausgebildet, dass es ohne eigenen Antrieb bei Öffnen des Daches zwangsweise die Relativbewegung der Randteile 8 gegenüber dem mittleren Bereich 7 bewirkt. Dadurch ist für weitere Antriebe kein Raum erforderlich. Das Gewicht kann zudem gering gehalten werden.

Mit der Erfindung ist weiterhin der Vorteil verbunden, dass auch die seitlichen, zum Beispiel parallel zu den seitlichen Rändern der Heckscheibe 6 liegenden Dichtungslinien an den Trennfugen des mittleren Bereichs 7 zu den Randteilen 8 nicht unterbrochen sein müssen, sondern die Randteile 8 können bei geschlossenem Dach 2 über ihre gesamte Längserstreckung von außen auf dem mittleren Bereich 7 dichtend aufliegen (in dem hier gezeigten Ausführungsbeispiel liegen die Trennfugen zwischen mittlerem Bereich 7 und Randteilen 8 parallel zu den Rändern der Heckscheibe 6, was nicht zwingend ist).

Gleichzeitig können die Randteile 8 und der mittlere Bereich 7 bei geschlossenem Dach 2 gemeinsam von unten dichtend unter den vorgeordneten Dachteil 4 greifen, so dass auch in dieser Horizontaldichtung keine Abstufung erforderlich ist und auch diese einfach und wirkungsvoll als zum Beispiel durchgehende Gummilippe ausgebildet sein kann.

Das gesamte bewegliche Dach 2 kann vor Einbau in den Rohbau auf Funktion getestet werden; die so fertig eingestellte modulare Einheit kann dann an den Rohbau angeliefert und lediglich über seitliche Hauptlager mit diesem verbunden werden.

Die Erfindung ist sowohl bei Fahrzeugen mit manuell zu bewegenden Dächern auch insbesondere bei voll- oder teilautomatischer Beweglichkeit des Daches 2 anwendbar.

## Patentansprüche

1. Cabriolet-Fahrzeug (1) mit zumindest zwei in geschlossener Dachstellung an ihrer Außenfläche an einer Fuge (5) voneinander getrennten und bezüglich der Fahrtrichtung (F) aufeinander folgenden Dachteilen (3;4), wobei zur Dachöffnung ein hinterer Dachteil (3) zumindest im wesentlichen heckwärts und abwärts verlagerbar und ein gegenüber diesem vorgeordneter Dachteil (4) an den hinteren Dachteil (3) heranbewegbar ist und wobei der hintere Dachteil geteilt ist in einen bezüglich der Fahrzeugquerrichtung mittleren Bereich (7) und außen liegende Randteile (8), und wobei der vorgeordnete Dachteil (4) durch den mittleren Bereich (7) abgestützt ist und die Randteile im Fugenbereich (5) angehängt sind und bei Dachöffnung aus einer gemeinsamen Ebene mit dem mittleren Bereich derart heraushebend bewegbar sind, dass die Randteile (8) bei geöffnetes Dach (2) gegenüber dem mittleren Bereich (7) heckwärts und zumindest bereichsweise abwärts verlagert sind,
**dadurch gekennzeichnet,**
**dass** die Randteile (8) frei von einer tragenden oder bewegungsvermittelnden Funktion für den vorgeordneten Dachteil (4) sind.

2. Cabriolet-Fahrzeug (1) nach Anspruch 1
**dadurch gekennzeichnet,**
**dass** der mittlere Bereich (7) mit seinem bei geschlossenem Dach (2) unteren Ende schwenkbeweglich um eine quer zum Fahrzeug (1) liegende erste Achse (10) gegenüber der Karosserie (9) und der vorgeordnete Dachteil (4) gegenüber dem hinteren Dachteil (3) um eine parallel zur ersten Achse (10) liegende zweite Achse (11) schwenkbeweglich an das obere Ende des mittleren Bereichs (7) angebunden ist, wohingegen die Randteile (8) über ein die heraushebende Bewegung vermittelndes Getriebe (16) am Fugenbereich (5) angehängt sind.

3. Cabriolet-Fahrzeug (1) nach Anspruch 2,
**dadurch gekennzeichnet,**
**dass** das Getriebe (16) einen Zweischlag ausbildet.

4. Cabriolet-Fahrzeug (1) nach Anspruch 3,
**dadurch gekennzeichnet,**
**dass** das Getriebe (16) ohne eigenen Antrieb bei Öffnen des Daches (2) zwangsweise die Relativbewegung der Randteile (8) gegenüber dem mittleren Bereich (7) bewirkt.

5. Cabriolet-Fahrzeug (1) nach einem der Ansprüche 1 bis 4,
**dadurch gekennzeichnet,**
**dass** unterhalb der Randteile (8) und des mittleren Bereichs (7) ein gemeinsamer Wasserkanal (13) gelegen ist, aus dem die Randteile (8) mit einer Aufwärtskomponente heraushebbar sind.

6. Cabriolet-Fahrzeug (1) nach einem der Ansprüche 1 bis 5,
**dadurch gekennzeichnet,**
**dass** der Wasserkanal (13) fest an den mittleren Bereich (7) angebunden ist und von dort aus quer seitlich herausragt.

7. Cabriolet-Fahrzeug (1) nach einem der Ansprüche 1 bis 6,
**dadurch gekennzeichnet,**
**dass** die Randteile (8) bei geschlossenem Dach nach Art von C-Säulen neben dem mittleren Bereich (7) angeordnet sind.

8. Cabriolet-Fahrzeug (1) nach einem der Ansprüche 1 bis 7,
**dadurch gekennzeichnet,**
**dass** die Randteile (8) bei geschlossenem Dach (2) über ihre gesamte Länge von außen auf dem mittleren Bereich (7) dichtend liegen.

9. Cabriolet-Fahrzeug (1) nach einem der Ansprüche 1 bis 8,
**dadurch gekennzeichnet,**
**dass** die Randteile (8) und der mittlere Bereich (7) bei geschlossenem Dach (2) gemeinsam von unten dichtend unter den vorgeordneten Dachteil (4) greifen.

10. Cabriolet-Fahrzeug (1) nach einem der Ansprüche 1 bis 9,
**dadurch gekennzeichnet,**
**dass** der mittlere Bereich (7) eine hintere sog. Hauptführungsstange eines Schwenkparallelogramms für den vorgeordneten Dachteil (4) ausbildet und zumindest nahezu parallel an jeder Fahrzeugseite eine Führungsstange (14) vorgesehen ist.

11. Bewegliches Fahrzeugdach (2) für ein Cabriolet-Fahrzeug (1) nach einem der Ansprüche 1 bis 10.

## Claims

1. A convertible vehicle (1) comprising at least two roof parts (3; 4) which, in the closed roof position, are separated from each other at their outer surfaces by a joint (5) and are arranged in succession with respect to the direction of travel (F), wherein, for roof opening, a rear roof part (3) can be displaced at least substantially rearward and downward, and a roof part (4) which is arranged in front of the rear roof part (3) can be moved towards the rear roof part (3), and wherein the rear roof part is divided, with respect to the transverse vehicle direction, into a central region (7) and into outer edge portions (8), and wherein the front roof part (4) is supported by the central region (7) and the edge portions are attached in the region of the joint (5) and can be moved out of a common plane with the central region, to open the roof, by lifting them out such that the edge portions (8) are displaced rearward and at least partly downward with respect to the central region (7) when the roof (2) is open,
**characterised in that**
the edge portions (8) do not have a supporting or movement-conveying function for the front roof part (4).

2. The convertible vehicle (1) according to claim 1, **characterised in that** the lower end of the central region (7) in the closed position of the roof (2) is connected to pivot with respect to the vehicle body (9) about a first axis (10), extending transversely to the vehicle (1), and the front roof part (4) is connected to pivot with respect to the rear roof part (3) about a second axis (11), which is parallel to the first axis (10), to the upper end of the central region (7), whereas the edge portions (8) are linked to the joint area (5) via a transmission (16) conveying the lifting movement.

3. The convertible vehicle (1) according to claim 2, **characterised in that** the transmission (16) forms a crank with coupling link.

4. The convertible vehicle (1) according to claim 3, **characterised in that** the transmission (16), without own drive, automatically effects the relative movement of the edge portions (8) with respect to the central region (7) when opening the roof (2).

5. The convertible vehicle (1) according to any one of claims 1 to 4, **characterised in that** a common water channel (13) is located below the edge portions (8) and the central region (7), from which water channel (13) the edge portions (8) can be lifted out with an upward component.

6. The convertible vehicle (1) according to any one of claims 1 to 5, **characterised in that** the water channel (13) is firmly attached to the central region (7), from which it protrudes laterally in a transverse direction.

7. The convertible vehicle (1) according to any one of claims 1 to 6, **characterised in that** the edge portions (8) are arranged next to the central region (7) in the manner of C pillars when the roof is closed.

8. The convertible vehicle (1) according to any one of claims 1 to 7, **characterised in that** the edge portions (8) lie on the central region (7) in a sealing manner from outside over their entire length when the roof (2) is closed.

9. The convertible vehicle (1) according to any one of claims 1 to 8, **characterised in that** the edge portions (8) and the central region (7) jointly engage under the front roof part (4) from below in a sealing manner when the roof (2) is closed.

10. The convertible vehicle (1) according to any one of claims 1 to 9, **characterised in that** the central region (7) forms a rear so-called main guide bar of a pivoting parallelogram for the front roof part (4) and a guide bar (14) is provided, at least nearly parallel, on each vehicle side.

11. Movable vehicle roof (2) for a convertible vehicle (1) according to any one of claims 1 to 10.

## Revendications

1. Véhicule cabriolet (1) comprenant au moins deux éléments de toit (3; 4) qui, en position fermée du toit, sont séparés à leurs faces extérieures par un joint (5) et sont disposés successivement par rapport à la direction de marche (F), il étant possible, pour l'ouverture du toit, de déplacer un élément de toit arrière (3) au moins sensiblement vers l'arrière et vers le bas et de déplacer un élément de toit (4), disposé avant l'élément de toit arrière (3), vers l'élément de toit (3), l'élément de toit arrière étant divisé, par rapport à la direction transversale du véhicule, en une région centrale (7) et en des parties de bord (8) extérieures, et l'élément de toit avant (4) étant supporté par la région centrale (7) et les parties de bord étant reliées dans la région du joint (5) et pouvant être déplacées, pour l'ouverture du toit, en dehors d'un plan commun avec la région centrale par levage de sorte que les parties de bord (8) soient déplacées vers l'arrière et au moins partiellement vers le bas par rapport à la région centrale (7) lorsque le toit (2) est ouvert,
**caractérisé en ce que**
les parties de bord (8) ne présentent pas de fonction de support ou de transmission de mouvement pour l'élément de toit avant (4).

2. Véhicule cabriolet (1) selon la revendication 1, **caractérisé en ce que** l'extrémité inférieure de la région centrale (7), en position fermée du toit (2), est reliée de manière à pouvoir pivoter, par rapport à la carrosserie (9), autour d'un premier axe (10), qui s'étend en direction transversale par rapport au véhicule (1), et l'élément de toit avant (4) est relié à l'extrémité supérieure de la région centrale (7) de manière à pouvoir pivoter, par rapport à l'élément de toit arrière (3), autour d'un deuxième axe (11), qui est parallèle au premier axe (10), tandis que les parties de bord (8) sont reliées à la région du joint (5) au moyen d'une transmission (16) transmettant le mouvement de levage.

3. Véhicule cabriolet (1) selon la revendication 2, **caractérisé en ce que** la transmission (16) constitue une manivelle avec élément de couplage.

4. Véhicule cabriolet (1) selon la revendication 3, **caractérisé en ce que** la transmission (16), sans son propre entraînement, effectue automatiquement le mouvement relatif des parties de bord (8) par rapport à la région centrale (7) lors de l'ouverture du toit (2).

5. Véhicule cabriolet (1) selon l'une quelconque des revendications 1 à 4, **caractérisé en ce qu'**un canal d'eau (13) commun est disposé au-dessous des parties de bord (8) et de la région centrale (7), les parties de bord (8) pouvant être levées vers l'extérieur à partir dudit canal d'eau (13) avec une composante vers le haut.

6. Véhicule cabriolet (1) selon l'une quelconque des revendications 1 à 5, **caractérisé en ce que** le canal d'eau (13) est fermement relié avec la région centrale (7), dont il fait saillie latéralement en direction transversale.

7. Véhicule cabriolet (1) selon l'une quelconque des revendications 1 à 6, **caractérisé en ce que** les parties de bord (8) sont disposées au voisinage de la région centrale (7) à la manière de montants C lorsque le toit est fermé.

8. Véhicule cabriolet (1) selon l'une quelconque des revendications 1 à 7, **caractérisé en ce que** les parties de bord (8) viennent se placer de l'extérieur sur la région centrale (7) de manière étanche sur toute leur longueur lorsque le toit (2) est fermé.

9. Véhicule cabriolet (1) selon l'une quelconque des revendications 1 à 8, **caractérisé en ce que** les parties de bord (8) et la région centrale (7) viennent en prise ensemble, par en dessous et de manière étanche, sous l'élément de toit avant (4) lorsque le toit (2) est fermé.

10. Véhicule cabriolet (1) selon l'une quelconque des revendications 1 à 9, **caractérisé en ce que** la région centrale (7) constitue une barre arrière, dite barre de guidage principale, d'un parallélogramme articulé pour l'élément de toit avant (4), et **en ce que** l'on prévoit une barre de guidage (14) au moins presque parallèle de chaque côté du véhicule.

11. Toit de véhicule déplaçable (2) pour un véhicule cabriolet (1) selon l'une quelconque des revendications 1 à 10.
